# EUROPÄISCHE PATENTANMELDUNG

(11) **EP 3 919 438 A1**
(43) Veröffentlichungstag der Anmeldung: **08.12.2021**
(21) Anmeldenummer: 20178136.6
(22) Anmeldetag: 03.06.2020
(51) Int. Cl.: C01B 3/24, C01B 3/50, C01B 32/30

(54) **VERFAHREN UND VORRICHTUNG ZUR THERMISCHEN SPALTUNG EINES KOHLENWASSERSTOFFHALTIGEN AUSGANGSMATERIALS SOWIE VERWENDUNG DES VERFAHRENS**

(71) Anmelder: Sahabi, Behzad, 52066 Aachen (DE)
(72) Erfinder: Sahabi, Behzad, 52066 Aachen (DE)
(74) Vertreter: Naeven, Ralf

(57) **Zusammenfassung**

Verfahren und Vorrichtung zur thermischen Spaltung eines kohlenwasserstoffhaltigen Ausgangsmaterials, wobei bei dem Verfahren
a) aus zumindest einem Anteil des gas- oder dampfförmig vorliegenden oder in Gas- oder Dampfform gebrachten Ausgangsmaterials mittels auf das Ausgangsmaterial wirkender Mikrowellenstrahlung in einer Mikrowellen-Plasmavorrichtung ein nichtthermisches Mikrowellenplasma erzeugt wird and dabei das Ausgangsmaterial in einen Kohlenstoffanteil und einen Wasserstoffanteil gespalten wird, und
b) Kohlenstoffanteil und Wasserstoffanteil in einem Trennvorgang außerhalb der Mikrowellen-Plasmavorrichtung voneinander getrennt werden.

Verwendung des Verfahrens zur Durchführung eines Verfahrens zur Reduktion eines Feststoffes, insbesondere von Silizium-Sauerstoff-Verbindungen, z.B. SiO₂, oder Eisen-Sauerstoffverbindungen, z.B. Fe₂O₃, oder Fe₃O₄, wobei für den Reduktionsprozess zumindest ein Teil des bei der thermischen Spaltung generierten Wasserstoffanteils eingesetzt wird.

## Beschreibung

Die Erfindung betrifft ein Verfahren und eine Vorrichtung zur thermischen Spaltung eines kohlenwasserstoffhaltigen Ausgangsmaterials.

Die für die hier betroffene Erfindung zur Spaltung vorgesehenen Kohlenwasserstoffe entstammen vorzugsweise aus solchen kohlenwasserstoffhaltigen Materialien, die anderweitig nicht nutzbar sind. So werden kohlenwasserstoffhaltige Gase oftmals mittels Gasfackeln abgefackelt, z.B. Begleitgase bei der Erdölförderung, nicht verwertbare Gasmengen bei der Biogaserzeugung, Deponiegas und nicht verwertbare Teile von Klärgas in Kläranlagen. Die abzufackelnden Gase werden daher auch Fackelgase oder Flaregase genannt. Die zur Spaltung vorgesehenen Kohlenwasserstoffe können aber auch aus Altkunststoffen, zum Beispiel aus Mülldeponien, nicht mehr werkstofflich recycelbaren Kunststoffabfällen, Bilgenöl oder Erdgas stammen.

Mittels der thermischen Spaltung gewonnener Wasserstoff kann in verschiedenster Weise genutzt werden, z.B. zur Energieerzeugung oder zur Reduktion von Siliziumdioxid oder Eisenerzen (Eisenoxid).

Die thermische Spaltung von Kohlenwasserstoffen enthaltenden Materialien unter Einsatz von Mikrowellen ist bekannt. So wird die Mikrowellentechnik zur Pyrolyse von organischem Material, insbesondere von Altreifen oder ähnlichen Gummimischungen, in der DE 3880155 T2 vorgeschlagen. Dabei wird das organische Material mittels eines heißen Gasstromes ohne Pyrolyse vorerhitzt und der vorerhitzte Stoff direkt in eine Mikrowellenentladungszone in einer im wesentlichen sauerstofffreien Gasatmosphäre mit überatmosphärischem Druck eingeführt. Es entstehen feste Spaltprodukte, die elementaren Kohlenstoff enthalten, und gasförmige Nebenprodukte. Die gasförmigen Nebenprodukte werden in den heißen Gasstrom zurückgeführt, um dort das Vorerhitzen zu unterstützen.

Die DE 10 2015 218 098 A1 offenbart ein Verfahren und eine Vorrichtung zur thermischen Spaltung von Kohlenwasserstoffen, wobei in einem Plasmagas zwischen mindestens zwei Elektroden thermische Energie durch einen Lichtbogen erzeugt wird. Das aufgeheizte Plasmagas wird mit den zu spaltenden Kohlenwasserstoffen gemischt, wobei die Kohlenwasserstoffe auf eine Temperatur von mehr als 600 °C erwärmt werden. Es entsteht ein Gemisch aus Kohlenstoff und Wasserstoff.

Aus der EP 1643001 A1 sind ein Verfahren und eine Vorrichtung zur thermischen Spaltung von Kohlenwasserstoffen bekannt, bei dem zur Spaltung das Plasma einer Mikrowellen-Entladung eingesetzt wird und welches dazu dient, polykristalline Diamantschichten zu erzeugen.

Die WO 2004033368 A1 offenbart eine Vorrichtung zur Brennstoffreformierung, mit der ein reformiertes, Wasserstoff enthaltendes Brennstoffgas erzeugt werden soll, welches frei von Kohlenmonoxid ist. In einer Ausführungsform der bekannten Vorrichtung durchläuft eine Mischung eines Kohlenwasserstoff-Brennstoffes eine erste Reformer-Einheit. Der reformierte Gasstrom wird anschließend durch ein nichtthermisches Plasma geführt, welches in einem Mikrowellen-Reaktor erzeugt wird, um verbliebenes Kohlenmonoxid umzuwandeln. Hiernach kann der Brennstoff einer Brennstoffzelle zugeführt werden. Es erfolgt gemäß diesem Stand der Technik somit keine Spaltung von Kohlenwasserstoffen im nichtthermischen Mikrowellenplasma.

Aus der WO 2019032554 A1 sind ein Verfahren und eine Vorrichtung der eingangs genannten Art bekannt, wonach Mikrowellenstrahlung einer Strahlungsquelle über einen Wellenleiter einem Resonator zugeführt wird, welcher einen Reaktionsraum umfasst. Aus einer ersten Materialquelle wird plasmaerzeugendes Material und aus einer zweiten Quelle ein Kohlenwasserstoff aufweisendes Ausgangsmaterial in den Reaktionsraum geführt. Im Plasma kommt es zur thermischen Spaltung des kohlenwasserstoffhaltigen Ausgangsmaterials, wodurch ein mit Kohlenstoff angereichertes Zwischenprodukt sowie ein mit Wasserstoff angereichertes Zwischenprodukt entstehen. Aus dem so entstandenen aufgespaltenen Material kann der Kohlenstoff in Form von Graphit oder Graphen abgeschieden werden.

Es ist bekannt, Eisenschwamm, abgekürzt auch DRI ("direct reduced iron") genannt, durch Reduktion von Eisenerz mittels Zugabe von Wasserstoff zu erzeugen (US 2018/0221947 A1). Es ist des Weiteren bekannt, zur Herstellung des für die Eisenreduktion eingesetzten Wasserstoffes ein kohlenwasserstoffhaltiges Gas, z.B. Methan, thermisch zu zerlegen, insbesondere unter Einsatz eines Hochtemperatur-Blasensäulenreaktors, in dem das kohlenwasserstoffhaltige Gas durch eine Metallschmelze geführt wird. Der Wasserstoff wird in Gasform aufgefangen, während der Kohlenstoff sich in der Metallschmelze als Feststoff absetzt (https://www.chemie.de/news/142290/wasserstoff-aus-methan-ohne-co2-ausstoss.html, im Internet am 27.06.2019; Tobias Günter Geißler, "Methanpyrolyse in einem Flüssigmetall-Blasensäulenreaktor (Verfahrenstechnik)", ISBN-10: 3843933448).

Das zur Wasserstoffherstellung einzusetzende kohlenwasserstoffhaltige Gas ist erforderlichenfalls zuvor einer Reinigung und Entschwefelung zuzuführen. Geeignete Gasreinigungsverfahren sind für diverse kohlenwasserstoffhaltige Gase, z.B. Faulgas, Deponiegas, Gase aus der anaeroben Industrieabwasserbehandlung und Erdgas bekannt. Beispielsweise kann hierfür das zu reinigende kohlenwasserstoffhaltige Gas zu einer Reaktion mit Eisenoxidhydroxid (FeO(OH)) gebracht werden, z.B. in einem Festbettabsorber oder einem Fließbettabsorber.

Der Erfindung liegt das technische Problem zugrunde, kohlenwasserstoffhaltige Ausgangsmaterialien einer effizienten Nutzung zuzuführen. Vorzugsweise sollen bislang aus wirtschaftlichen oder technischen Gründen nicht oder wenig genutzte Ausgangsmaterialien, insbesondere Fackelgase oder Flaregase, einer wirtschaftlich vernünftigen Nutzung zugeführt werden.

Das technische Problem wird hinsichtlich der Vorrichtung mit den Merkmalen des Anspruchs 1 und hinsichtlich der Vorrichtung mit den Merkmalen des Anspruchs 10 gelöst. Zudem wird mit Anspruch 8 noch eine besonders vorteilhafte Verwendung des erfindungsgemäßen Verfahrens vorgeschlagen.

Hinsichtlich des Verfahrens ist somit vorgesehen, mittels auf das Ausgangsmaterial wirkender Mikrowellenstrahlung in einer Mikrowellen-Plasmavorrichtung aus zumindest einem Anteil des gas- oder dampfförmig vorliegenden oder in Gas- oder Dampfform gebrachten Ausgangsmaterials ein nicht-thermisches Mikrowellenplasma zu erzeugen and dabei das Ausgangsmaterial in einen Kohlenstoffanteil und einen Wasserstoffanteil zu spalten. Das Verfahren kommt somit ohne einen zusätzlichen plasmaerzeugenden Stoff aus. Anschließend werden der Kohlenstoffanteil und der Wasserstoffanteil in einem Trennvorgang außerhalb der Mikrowellen-Plasmavorrichtung voneinander getrennt.

Das erfindungsgemäße Verfahren wird vorzugsweise so ausgeführt, dass das Ausgangsmaterial aus Erdölbegleitgas generiert wird. Damit ist eine Alternative zur gängigen Abfackelung des Erdölbegleitgases gegeben. Auch andere zur Abfackelung vorgesehene kohlenwasserstoffhaltige Grundstoffe können zur Generierung des Ausgangsmaterials eingesetzt werden. Die Verwendung dieser ansonsten als Fackelgase oder Flaregase eingesetzten Gase ist umweltfreundlich, da zum einen die Emission von CO₂ reduziert wird und zum anderen Energie gewonnen werden kann. Alternativ kann das Ausgangsmaterial bevorzugt aus verflüssigtem Kunststoff, insbesondere aus Altkunststoff, oder aus Bilgenöl oder aus Erdgas generiert werden.

Das Ausgangsmaterial liegt vorzugsweise in gereinigter Form vor. Hierfür kann das eingesetzte Erdölbegleitgas oder der sonstige kohlenwasserstoffhaltige Grundstoff einer Reinigung, z.B. einer Entschwefelung und möglicherweise weiterer Reinigungsmaßnahmen, zuzuführen. Geeignete Reinigungsverfahren sind aus dem Stand der Technik bekannt, z.B. für diverse kohlenwasserstoffhaltige Gase, z.B. Faulgas, Deponiegas, Gase aus der anaeroben Industrieabwasserbehandlung und Erdgas. Beispielsweise kann hierfür das Ausgangsmaterial zu einer Reaktion mit Eisenoxidhydroxid (FeO(OH)) gebracht werden, z.B. in einem Festbettabsorber oder einem Fließbettabsorber.

Es kann vorteilhaft sein, das erfindungsgemäße Verfahren so auszuführen, dass der Trennvorgang eine Abscheidung zumindest eines Teils des Kohlenstoffanteils umfasst. Die Abscheidung kann z. B. als Graphit und/oder Graphen erfolgen.

Für den Trennvorgang kann z. B. mindestens ein elektrostatischer Separator, insbesondere ein Korona-Reaktor, eingesetzt werden, alternativ können ein Fliehkraftabscheider, z. B. in Form einer Zyklonvorrichtung, oder eine Metallschmelze eingesetzt werden.

Hinsichtlich der Verwendung wird vorgeschlagen, das erfindungsgemäße Verfahren zur Durchführung eines Verfahrens zur Reduktion eines Feststoffes, insbesondere von Siliziumdioxid oder einem oder mehreren Eisenoxiden, z.B. wie sie in Eisenerzen vorkommen, wie beispielsweise Fe₂O₃ oder Fe₃O₄, einzusetzen, wobei für den Reduktionsprozess zumindest ein Teil des bei der thermischen Spaltung generierten Wasserstoffanteils eingesetzt wird.

Alternativ oder parallel zur Feststoffreduktion kann ein Teil des bei der thermischen Spaltung generierten Wasserstoffanteils zur Energiegewinnung eingesetzt werden.

Vorteilhafte Ausführungsformen der erfindungsgemäßen Vorrichtung ergeben sich aus den abhängigen Vorrichtungsansprüchen.

Im Folgenden werden vorteilhafte Ausführungsbeispiele des erfindungsgemäßen Verfahrens, möglicher Verwendungen des Verfahrens sowie der erfindungsgemäßen Vorrichtung anhand von Figuren dargestellt.

Es zeigt
- Fig. 1:: ein Ablaufschema für das erfindungsgemäße Verfahren,
- Fig. 2:: in Schrägaufsicht eine schematische Darstellung einer ersten Teilanlage (obere Ebene) einer erfindungsgemäßen Vorrichtung,
- Fig. 3:: in Schrägaufsicht eine schematische Darstellung einer zweiten Teilanlage (untere Ebene) der erfindungsgemäßen Vorrichtung,
- Fig. 4:: im Querschnitt schematisch einen Mikrowellenplasma-Reaktor,
- Fig. 5:: im Querschnitt schematisch einen elektrostatischen Separator.

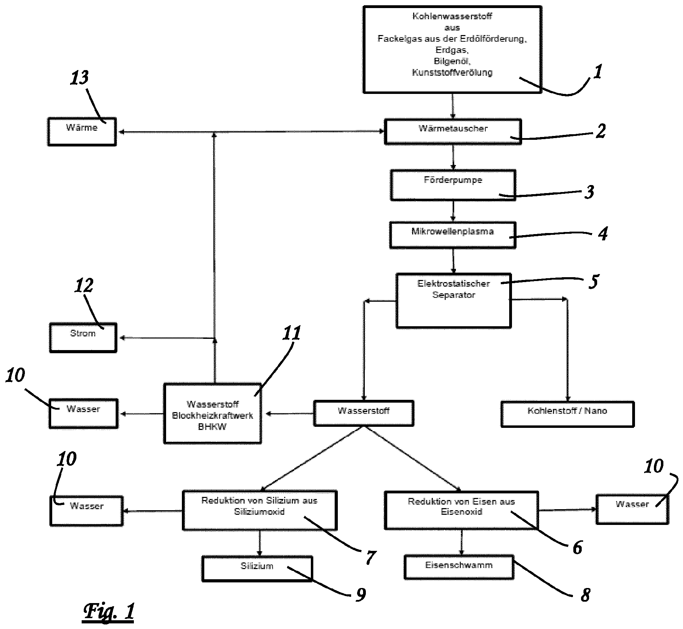

Fig. 1 stellt ein Ablaufschema eine beispielhafte Variante des erfindungsgemäßen Verfahrens dar, wobei nicht sämtliche der dargestellten Verfahrensschritte obligatorisch sind, sondern möglicherweise auch durch alternative Verfahrensschritte ersetzt werden oder auch weggelassen werden können.

Besonders vorteilhaft ist die Durchführung des Verfahrens, wenn das Ausgangsmaterial für das erfindungsgemäße Verfahren aus Begleitgas aus der Erdölförderung, das üblicherweise abgefackelt wird, verwendet wird. Im Folgenden wird dieses Gas als Fackelgas bezeichnet, auch wenn es gemäß der Erfindung nicht mehr abgefackelt wird.

Es können allerdings auch andere Kohlenwasserstoffe, zum Beispiel Erdgas, Bilgenöl oder Öl aus der Kunststoffverölung herangezogen werden. Es ist selbstverständlich, dass das Ausgangsmaterial in einen für das Verfahren passenden Zustand, insbesondere Aggregatzustand, gebracht und erforderlichenfalls gereinigt und/oder von unerwünschten Stoffen, z.B. Schwefel, befreit vorliegt.

Das Ausgangsmaterial wird aus einer Ausgangsmaterialquelle 1, optional über eine Wärme zuführende Einheit, vorzugsweise über einen Wärmetauscher 2, und optional über eine Förderpumpe 3, zu einer Mikrowellenplasma-Einheit 4, im Folgenden kurz MWP-Einheit 4, gefördert, in der aus dem Ausgangsmaterial ein Mikrowellenplasma erzeugt wird. Die Förderpumpe ist entbehrlich, wenn das Ausgangsmaterial mit hinreichendem Druck in eine das Verfahren durchführende Vorrichtung eingebracht wird. Im Mikrowellenplasma wird der Kohlenwasserstoff des Ausgangsmaterials in einen Kohlenstoffanteil und einen Wasserstoffanteil aufgespalten. Anschließend wird das Gemisch aus Kohlenstoffanteil und Wasserstoffanteil einem elektrostatischen Separator 5 zugeführt, der als Trennvorrichtung zur Abtrennung des Kohlenstoffanteils vom Wasserstoffanteil dient. Der Kohlenstoff kann dabei im Wesentlichen nanoförmig, zum Beispiel als Graphen, anfallen. Der Kohlenstoff kann aber auch als Graphit oder in einer sonstigen Form anfallen. Der Kohlenstoff wird separat aufgefangen und kann weiteren Verwendungen zugeführt werden.

Alternativ zum elektrostatischen Separator können auch andere Trennvorrichtungen eingesetzt werden, z.B. eine auf Fliehkraft basierende Einrichtung, beispielsweise ein Zyklonabscheider oder eine Metallschmelze, durch die das Wasserstoff-Kohlenstoffgemisch geleitet wird. Derartige Abscheide- oder Trennvorrichtungen sind aus dem Stand der Technik bekannt.

Der Wasserstoff kann verschiedenen Verwendungen zugeführt werden, z.B. einer ersten Reduktionsvorrichtung 6 zur Reduktion von Eisen-Sauerstoff-Verbindungen zu Eisen, mit der beispielsweise Eisenschwamm 8 erzeugt werden kann, und/oder z.B. einer zweiten Reduktionsvorrichtung 7 zur Reduktion von Silizium-Sauerstoff-Verbindungen, insbesondere SiO₂, mit dem reines Silizium 9 erzeugt werden kann. Bei beiden beispielhaften Reduktionsprozessen fällt neben dem gewonnenen reduzierten Material Wasser 10 an.

Eine weitere optionale alternative oder weitere Verwendung des erzeugten Wasserstoffs kann der Betrieb eines Blockheizkraftwerkes 11 sein, bei dem wiederum Wasser 10 anfällt und mit dem Strom 12 und Wärme 13 erzeugt werden kann. Die Wärme 13 und/oder der Strom 12 können vollständig oder zum Teil für die erfindungsgemäße Vorrichtung eingesetzt werden, z. B. für den optionalen Wärmetauscher 2 bzw. für die optionale Förderpumpe 3 oder für die MWP-Einheit 4.

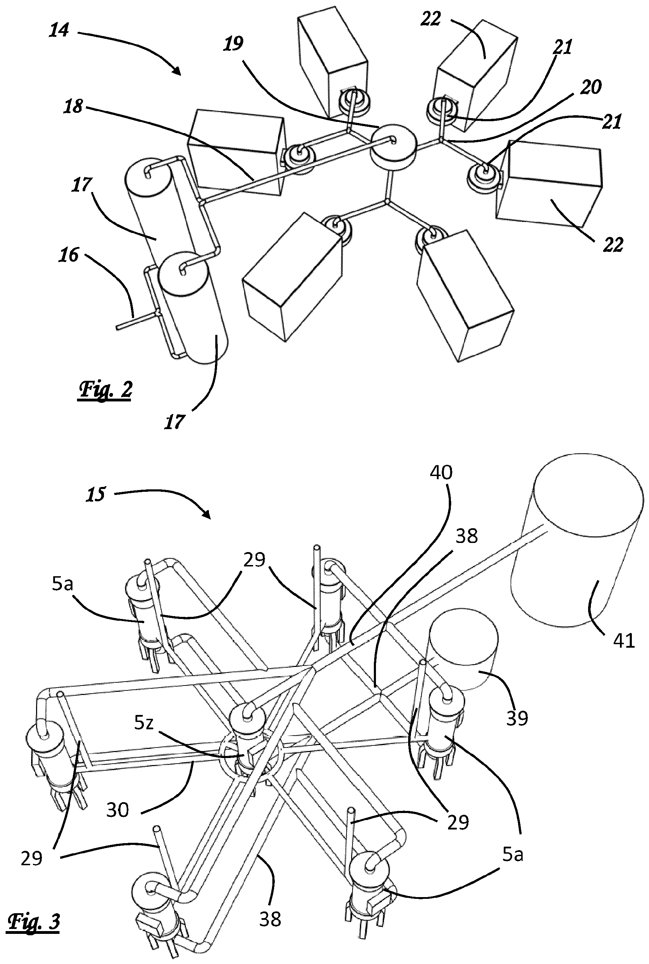

Die Figuren 2 und 3 zeigen in zwei perspektivischen Ansichten zwei Teilanlagen einer beispielhaften Ausführungsform der erfindungsgemäßen Vorrichtung, nämlich Fig. 2 eine erste Teilanlage 14 und Fig 3 eine zweite Teilanlage 15. Die Aufteilung der Darstellung in zwei Teilanlagen 14 und 15 erfolgt für die bessere Übersichtlichkeit. Tatsächlich wirken beide Teilanlagen 14 und 15 zusammen, wobei die erste Teilanlage 14 z.B. oberhalb der zweiten Teilanlage 15 angeordnet ist. Wie weiter unten dargestellt wird, gibt es einen Materialfluss zwischen beiden Teilanlagen 14 und 15.

Aus einer in den Fig. 2 und 3 nicht dargestellten Quelle wird ein Grundstoff, hier beispielsweise Fackelgas, über ein Eingangsrohrsystem 16 einer Reinigungseinheit, hier beispielsweise aus zwei Absorptionsreaktoren 17 bestehend, zugeführt, wo das Fackelgas von Fremdstoffen, z.B. Schwefel, möglichst weitgehend befreit wird. Im Falle von Absorptionsreaktoren kann es sich bei den Absorptionsreaktoren 17 z.B. um Festbettabsorber oder Fließbettabsorber handeln. Das zu reinigende Fackelgas kann in den Absorptionsreaktoren 17 z.B. zu einer Reaktion mit Eisenoxidhydroxid FeO(OH) gebracht werden.

Das gereinigte Fackelgas wird als Ausgangsmaterial über ein zweites Rohrsystem 18 optional einer Verteilereinheit 19 zugeführt, die eine hier nicht sichtbare, vorzugsweise fraktal strukturierte Verteilerstruktur aufweisen kann und das Ausgangsmaterial über Verteilerrohrsysteme 20 Mikrowellenplasma-Reaktoren 21, im Folgenden MWP-Reaktoren 21 genannt, zuführt. Der besseren Übersichtlichkeit halber sind lediglich ein Verteilerrohrsystem 20 und zwei MWP-Reaktoren 21 mit Bezugszahlen versehen. Fig. 2 zeigt insgesamt sechs MWP-Reaktoren 21. Es können jedoch MWP-Reaktoren 21 auch in geringerer oder höherer Anzahl und/oder in anderer Anordnung vorgesehen werden. Die MWP-Reaktoren 21 werden jeweils von einer, vorzugsweise eine Steuerung aufweisenden Mikrowellenquelle 22 gespeist.

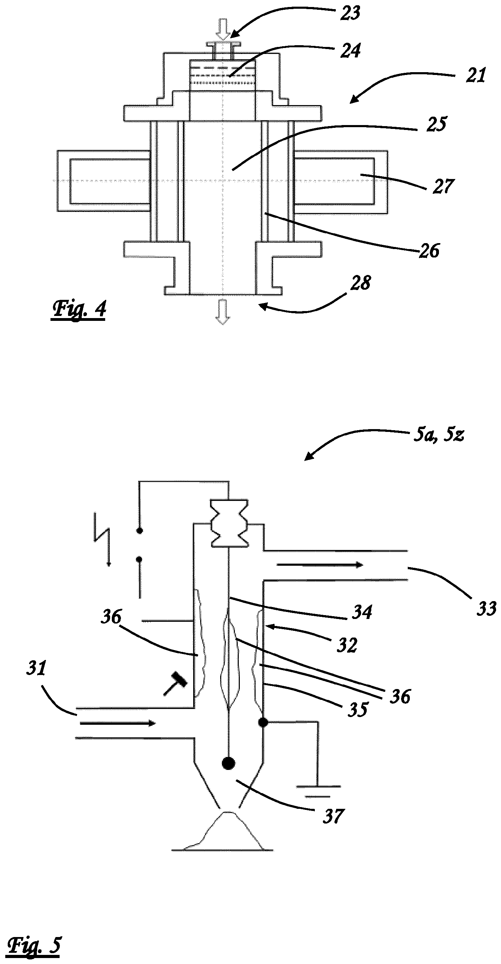

Fig. 4 zeigt einen MWP-Reaktor 21 schematisch im Querschnitt mit einem Reaktoreinlass 23, dem in der mit Pfeil symbolisierten Flussrichtung eine Verteilereinrichtung 24 folgt, die vorzugsweise eine hier angedeutete, eine gleichmäßige Verteilung des gereinigten Ausgangsmaterials auf den Reaktorquerschnitt bewirkende fraktale Struktur aufweist. Ein Reaktorraum 25 ist vorzugsweise von einer Reaktorraumwand 26, beispielsweise aus Quarzglas, begrenzt und von einem Mikrowellenhohlleiter 27 umgeben, der von der in Fig. 3 nicht gezeigten Mikrowellenquelle 22 (siehe Fig. 2) gespeist wird. Im Reaktorraum 25 des MWP-Reaktors 21 wird ein nicht-thermisches Mikrowellenplasma mit dem eingespeisten Ausgangsmaterial erzeugt. Weitere Zusatzstoffe sind zur Erzeugung des Plasmas nicht erforderlich. Die Erzeugung des Mikrowellenplasmas bewirkt eine Aufspaltung der Kohlenwasserstoffe des Ausgangsmaterials in Wasserstoff und Kohlenstoff.

Die Spaltprodukte Wasserstoff und Kohlenstoff liegen als Gemisch vor. Das Wasserstoff/Kohlenstoff-Gemisch verlässt in Flussrichtung (Pfeil) den MWP-Reaktor 21 durch den Reaktoraustritt 28 hindurch in ein in Fig. 4 nicht gezeigtes Reaktoraustrittsrohr 29. Die bei fertiger Gesamtanlage an die Reaktoraustritte 28 der MWP-Reaktoren 21 angeschlossenen Reaktoraustrittsrohre 29 sind in Fig. 3 mit offenen Enden gezeigt, die in der Gesamtanlage an die Reaktoraustritte 28 (Fig. 4) anschließen.

Das Wasserstoff/Kohlenstoff-Gemisch gelangt über die Reaktoraustrittsrohre 29 in ein zweites Verteilerrohrsystem 30, welches das Wasserstoff/Kohlenstoff-Gemisch zu sechs äußeren elektrostatischen Separatoren 5a (nur drei davon sind mit einem Bezugszeichen versehen) und einem zentralen elektrostatischen Separator 5z führt. Die äußeren elektrostatischen Separatoren 5a sind jeweils einem MWP-Reaktor 21 zugeordnet.

Der zentrale elektrostatische Separator 5z dient als Ausweichseparator, der dann mit dem Wasserstoff/Kohlenstoff-Gemisch eines der MWP-Reaktoren 21 bedient wird, wenn der diesem MWP-Reaktor 21 zugeordnete äußere elektrostatische Separator 5a zu Reinigungs- oder Wartungszwecken aus dem Verfahren herausgenommen wird. Die Steuerung des Wasserstoff-/Kohlenstoffgemischs kann z.B. jeweils über ein hier nicht dargestelltes, dem entsprechenden äußeren elektrostatischen Separator 5a zugeordneten Drei-Wege-Ventil erfolgen. Die Begriffe "äußerer elektrostatischer Separator 5a" und "zentraler elektrostatischer Separator 5z" beschreiben die in den Figuren gegebene beispielhafte räumliche Anordnung. Selbstverständlich sind andere räumliche Anordnungen möglich. Es kann auch auf einen Ausweichseparator verzichtet werden oder es können mehrere Ausweichseparatoren vorgesehen werden.

Ein elektrostatischer Separator 5a oder 5z ist in Fig. 5 schematisch im Querschnitt gezeigt. Das Wasserstoff/Kohlenstoff-Gemisch gelangt über einen Separatoreingang 31 in den elektrostatischen Separator 5a oder 5z und steigt dort in einem Separatorturm 32 auf.

Auf dem Weg durch den Separatorturm 32 wird der Kohlenstoff mittels einer Sprühelektrode 34 und einer Niederschlagselektrode 35, zwischen denen eine Spannung aufgebaut ist, elektrostatisch aus dem Wasserstoff/Kohlenstoff-Gemisch abgetrennt und schlägt sich an der Niederschlagselektrode 35, die gleichzeitig die innere Umfangswand des Separatorturms 32 ist, und an der Sprühelektrode 34 nieder.

Der Kohlenstoff ist hier als Kohlenstoffmasse 36 dargestellt. Durch Erschütterung, z.B. durch Schläge gegen den Separatorturm 36, wird der Kohlenstoff 36 abgeworfen und verlässt über einen Fallschacht 37 den Separator 5. Durch ein Kohlenstoffsammelrohrsystem 38 (Fig. 3) und erforderlichenfalls mittels Vortriebsmitteln, wie z.B. mindestens einer hier nicht dargestellten Förderschnecke, gelangt der Kohlenstoff aus allen Separatoren 5a oder 5z in einen Feststoffsammelbehälter 39 und kann mit ihm oder aus ihm heraus weiteren Verwendungen zugeführt werden.

Der Wasserstoff aus dem im Separatorturm 36 getrennten Wasserstoff/Kohlenstoff-Gemisch steigt weiter auf und verlässt über einen Separatorausgang 33 den elektrostatischen Generator 5a oder 5z und gelangt über ein Wasserstoff-Verteilerrohrsystem 40 in einen Wasserstoffsammelbehälter 41. Anstelle der Sammlung des Wasserstoffs in dem Wasserstoffsammelbehälter 41 oder zusätzlich dazu kann der Wasserstoff auch unmittelbar oder mittelbar weiteren Verwendungen zugeführt werden, wie z. B. einem Blockheizkraftwerk oder einer Anlage zur Reduktion eines Materials, wie z.B. Eisenoxid oder Siliziumoxid oder Siliziumdioxid.

**Bezugszeichenliste**

| | | | |
|---|---|---|---|
| 1 | Ausgangsmaterialquelle | 30 | zweites Verteilerrohrsystem |
| 2 | Wärmetauscher | 31 | Separatoreingang |
| 3 | Förderpumpe | 32 | Separatorturm |
| 4 | Mikrowellenplasma-Einheit | 33 | Separatorausgang |
| 5a | Äußerer elektrostatischer Separator | 34 | Sprühelektrode |
| 5z | Zentraler elektrostat. Separator | 35 | Niederschlagselektrode |
| 6 | Erste Reduktionsvorrichtung | 36 | Kohlenstoffmasse |
| 7 | Zweite Reduktionsvorrichtung | 37 | Fallschacht |
| 8 | Eisenschwamm | 38 | Kohlenstoffsammelrohrsystem |
| 9 | Silizium | 39 | Feststoffsammelbehälter |
| 10 | Wasser | 40 | Wasserstoff-Verteilerrohrsystem |
| 11 | Blockheizkraftwerk | 41 | Wasserstoffsammelbehälter |
| 12 | Strom | | |
| 13 | Wärme | | |
| 14 | Erste Teilanlage | | |
| 15 | Zweite Teilanlage | | |
| 16 | Eingangsrohrsystem | | |
| 17 | Absorptionsreaktor | | |
| 18 | Zweites Rohrsystem | | |
| 19 | Verteilereinheit | | |
| 20 | Verteilerrohrsysteme | | |
| 21 | Mikrowellenplasmareaktor | | |
| 22 | Mikrowellenquelle | | |
| 23 | Reaktoreinlass | | |
| 24 | Verteilereinrichtung | | |
| 25 | Reaktorkern | | |
| 26 | Reaktorkernwand | | |
| 27 | Mikrowellenhohlleiter | | |
| 28 | Reaktoraustritt | | |
| 29 | Reaktoraustrittsrohr | | |

## Patentansprüche

1. Verfahren zur thermischen Spaltung eines kohlenwasserstoffhaltigen Ausgangsmaterials, bei dem
a) aus zumindest einem Anteil des gas- oder dampfförmig vorliegenden oder in Gas- oder Dampfform gebrachten Ausgangsmaterials mittels auf das Ausgangsmaterial wirkender Mikrowellenstrahlung in einer Mikrowellen-Plasmavorrichtung ein nicht-thermisches Mikrowellenplasma erzeugt wird and dabei das Ausgangsmaterial in einen Kohlenstoffanteil und einen Wasserstoffanteil gespalten wird, und
b) Kohlenstoffanteil und Wasserstoffanteil in einem Trennvorgang außerhalb der Mikrowellen-Plasmavorrichtung voneinander getrennt werden.

2. Verfahren nach Anspruch 1, **dadurch gekennzeichnet, dass** das Ausgangsmaterial aus Erdölbegleitgas generiert wird.

3. Verfahren nach Anspruch 1, **dadurch gekennzeichnet, dass** das Ausgangsmaterial aus verflüssigtem Kunststoff, insbesondere aus Altkunststoff, aus Bilgenöl oder aus Erdgas generiert wird.

4. Verfahren nach einem der vorhergehenden Ansprüche, **dadurch gekennzeichnet, dass** der Trennvorgang eine Abscheidung zumindest eines Teils des Kohlenstoffanteils umfasst.

5. Verfahren nach Anspruch 4, **dadurch gekennzeichnet, dass** das Abscheiden in mindestens einem elektrostatischen Separator erfolgt.

6. Verfahren nach Anspruch 4, **dadurch gekennzeichnet, dass** das Abscheiden mittels Fliehkraft erfolgt.

7. Verfahren nach Anspruch 4, **dadurch gekennzeichnet, dass** das Abscheiden mittels einer Metallschmelze erfolgt.

8. Verwendung des Verfahrens nach einem der Ansprüche 1 bis 7 zur Durchführung eines Verfahrens zur Reduktion eines Feststoffes, insbesondere von Silizium-Sauerstoff-Verbindungen, z.B. SiO₂, oder Eisen-Sauerstoffverbindungen, z.B. Fe₂O₃, oder Fe₃O₄, wobei für den Reduktionsprozess zumindest ein Teil des bei der thermischen Spaltung generierten Wasserstoffanteils eingesetzt wird.

9. Verwendung nach Anspruch 8, **dadurch gekennzeichnet, dass** ein Teil des bei der thermischen Spaltung generierten Wasserstoffanteils zur Energiegewinnung eingesetzt wird.

10. Vorrichtung zur thermischen Spaltung eines kohlenwasserstoffhaltigen Ausgangsmaterials, umfassend
a) mindestens eine Mikrowellen-Plasmavorrichtung (4) mit einem Reaktorraum (25) und einer Mikrowellenquelle (22),
b) eine Zuleitung für das gasförmige oder dampfförmige Ausgangsmaterial zum Reaktorraum (25), wobei
c) die mindestens eine Mikrowellen-Plasmavorrichtung (4) eingerichtet ist, aus zumindest einem Teil des im Reaktorraum (25) befindlichen Ausgangsmaterials ein nichtthermisches Plasma zur thermischen Spaltung des Ausgangsmaterials in einen Kohlenstoffanteil und einen Wasserstoffanteil zu erzeugen, und
d) mindestens eine über eine Ableitung mit dem mindestens einen Reaktorraum (25) verbundene Trennvorrichtung, welche eingerichtet ist, den Kohlenstoffanteil vom Wasserstoffanteil zumindest zum Teil zu trennen.

11. Vorrichtung nach Anspruch 10, **dadurch gekennzeichnet, dass** die mindestens eine Trennvorrichtung oder mindestens eine der Trennvorrichtungen eine Abscheideeinheit umfasst.

12. Vorrichtung nach Anspruch 11, **dadurch gekennzeichnet, dass** die Abscheideeinheit einen elektrostatischen Separator (5a, 5z), vorzugsweise einen Korona-Reaktor umfasst.

13. Vorrichtung nach Anspruch 11, **dadurch gekennzeichnet, dass** die Abscheideeinheit einen Fliehkraftabscheider umfasst.

14. Vorrichtung nach Anspruch 10, **dadurch gekennzeichnet, dass** die mindestens eine Trennvorrichtung oder mindestens eine der Trennvorrichtungen einen Metallschmelze-Wäscher umfasst.

15. Vorrichtung nach einem der Ansprüche 10 bis 14, **gekennzeichnet durch** mindestens eine mit der mindestens einen Trennvorrichtung oder mit mindestens eine der Trennvorrichtungen über eine Zwischenleitung verbundene Reduktionseinheit (6, 7), welche eingerichtet ist, eine Substanz mittels des Wasserstoffanteils zu reduzieren.
